# EUROPÄISCHE PATENTSCHRIFT

(11) **EP 1 048 634 B1**
(45) Veröffentlichungstag und Bekanntmachung des Hinweises auf die Patenterteilung: **23.06.2010**
(21) Anmeldenummer: 00108329.4
(22) Anmeldetag: 15.04.2000
(51) Int. Cl.: C05D 3/02, C05D 5/00, C05D 1/00, C05D 1/02

(54) **Verfahren zur Herstellung von Düngemittelpressgranulaten**
Process for preparing fertiliser granules by compaction
Procédé de fabrication de granulés d'engrais par compactage

(30) Priorität: 28.04.1999 DE 19919233
(43) Veröffentlichungstag der Anmeldung: 02.11.2000
(73) Patentinhaber: K+S KALI GmbH, 34131 Kassel (DE)
(72) Erfinder: Kleine-Kleffmann, Ulrich, Dr., 36251 Bad Hersfeld (DE); Waldmann, Ludger Dr., 34302 Guxhagen (DE); Wolf, Frank, Dr., 36277 Schenklengsfeld (DE)

(56) Entgegenhaltungen:
- CA-A- 988 315
- GB-A- 1 558 571

## Beschreibung

Die Erfindung betrifft die Kompaktierung von Kalisalzen zur Herstellung von Düngemittelgranulaten, insbesondere von Kaliumchlorid, welche durch Aufbereitung von Rohsalzen oder Solen auf dem Wege der Kristallisation oder Flotation gewonnen wurden.

Üblicherweise werden Kalisalzgranulate durch Aufbau- und Pressgranulation hergestellt. Bei der Aufbaugranulation wird feuchtes Salz aus der Entwässerung mit trockenem Feinstsalz (rezirkulierter Staub) sowie Granulierhilfsmitteln vermischt und mit Wasser oder Ablauge auf die entsprechende Granulierfeuchte eingestellt und anschließend in Trommeln zu runden Granalien verdichtet. Die entstehenden "grünen" Granalien werden anschließend getrocknet.

Bei der Pressgranulierung wird bereits getrocknetes Feinprodukt auf Pressen (z.B. Walzenpressen) zu sogenannten Schülpen von einigen mm Stärke verpresst, die anschließend einem Mahl- und Siebprozess unterworfen werden. Das grobe Siebprodukt bildet das fertige Produkt, wohingegen das Unterkorn rezirkuliert wird. (Ullmanns Encyklopädie der technischen Chemie, 4. Auflage, Band 13, S. 471, Verlag Chemie Weinheim) Granulierhilfsmittel werden beim Kompaktieren nicht zugegeben. Die entstehenden Pressgranulate sind fest und bei normalen mittleren Feuchten, wie sie in mittleren Breiten vorherrschen, stabil lagerfähig.
In CA 988315 A wird ein Verfahren zur Kompaktierung von Kalisalzen offenbart, bei dem Kalisalze mit gebrannten Kalk in einem Anteil von 0,1 bis 0,8 Prozent als Additiv zugesetzt wird. Ziel der Additivzugabe ist hierbei den schädlichen Einfluß von Flotationsreagenzien bei der Kompaktierung zu reduzieren, ohne die Reagenzien zuvor abzutrennen.

Bei hohen relativen Luftfeuchten, wie sie z.B. in tropischen Ländern anzutreffen sind, ist eine erhöhte Wasseraufnahme im Pressgranulat festzustellen. Diese kann im Weiteren zu Komzerfall, Erhöhung des Feinanteils und zu Verhärtungen im Produkt führen.

Zerfallserscheinungen, wie Sie zum Beispiel bei Salzlecksteinen für die Tierernährung unter dem Einfluß der Witterung im Freien auftreten, wird u.a. nach US 2,599,436 wie folgt begegnet: Die Salzkomponente, in der Regel Natriumchlorid, wird mit Anteilen bis zu 5 % MgO sowie bis zu 12,5 % einer ca. 20 %igen MgCl₂-Lösung vermischt und in Formen ausgehärtet.

Ein solches Vorgehen ist bei der Pressgranulierung von Kalidüngesalzen nicht möglich, denn diese Kompaktierung ist ein trockenes Verfahren bei dem der Pressdruck die entscheidende Rolle für die Festigkeit der Granulate spielt. Außerdem würde die geforderte chemische Qualität der Düngergranulate in nicht zulässiger Weise beeinträchtigt.

Es ist die Aufgabe zu lösen, ein auch unter extremen Klimabedingungen, wie hohen relativen Luftfeuchten und erhöhten Außentemperaturen festes und stabiles Pressgranulat herzustellen, welches auch bei längerer Lagerung nicht zerfällt. Dabei soll die geforderte chemische Qualität des zu granulierenden Salzes nicht beeinträchtigt werden.

Es wurde nun gefunden, dass die Wasseraufnahme eines Pressgranulates, zum Beispiel eines 60er Kalidüngesalzes aus umgebender feuchter Luft wesentlich unterdrückt werden kann, wenn dem trockenen zu granulierenden Feinsalz geringe Mengen an Magnesiumoxid in Pulverform zugegeben und eine trockene Mischung hergestellt wird, die dann nach bekanntem Pressverfahren zu Granalien verarbeitet wird.

Es wurde weiterhin gefunden, dass das auf diese Weise erzeugte Pressgranulat auch unter erhöhten Luftfeuchten und Temperaturen eine Endberstfestigkeit besitzt, die höher ist, als die eines nicht erfindungsgemäß behandelten vergleichbaren Pressgranulates. Die Wirkung kann auch nach längerer Lagerung bei hohen relativen Feuchten beobachtet werden. Das Produkt bleibt körnig und stabil.

Der positive Effekt kann bei allen handelsüblichen MgO-Spezifikationen beobachtet werden.

In der praktischen Ausführung wird feines zu granulierendes Salz, wie zum Beispiel ein feines trockenes KCI-Kristallisat aus einem Löseprozess oder aus einem Flotationsprozess mit dem Additiv in Pulverform (z.B. feingemahlenes Magnesiumoxid vermischt und die Mischung unter in der Praxis üblichen Pressdrücken zum Beispiel auf einer Walzenpresse zu Schülpen verpresst. Diese werden anschließend gemahlen und in üblicher Kreislauffahrweise mit einer Klassierung zu Granulat der geforderten Korngröße verarbeitet. Erfindungsgemäß werden Gehalte von 0,2 bis 2 Prozent, vorzugsweise 1 - 1,5 Prozent, trockenes MgO bezogen auf die trockene Granulatmenge zudosiert . Höhere Gehalte führen zu einer unwesentlichen Verbesserung des Ergebnisses, die jedoch in keinem Verhältnis zur einhergehenden Reduzierung des Wertstoffgehaltes im Endgranulat steht.

Die positive Wirkung wird gleichermaßen entfaltet, wenn in den erfindungsgemäß geringen Anteilen Calciumoxid vorzugsweise gebrannter Kalk in Pulverform oder gebrannter Dolomit (CaO/MgO) vor dem Verpressen zudosiert werden. Das Verfahren ist nicht auf die Kompaktierung von Kaliumchlorid beschränkt sondern ist gleichermaßen für andere Kalidüngesalze anwendbar, zum Beispiel auch für Kaliumsulfat.

Die Erfindung wird anhand nachfolgender Ausführungsbeispiele spezifiziert:

### Beispiel 1:

Einem trockenen 60er Flotationsfeinsalz wird vor dem Verpressen auf einer Walzenpresse eine solche Menge eines handelsüblichen Magnesiumoxidpulvers zudosiert, dass sich im kontinuierlichen Prozess der Granulierung im Kreislauf mit einer Siebklassierung ein Gehalt von 1,3 % MgO bezogen auf die Fertiggranulatmenge einstellt. Durch Vermischungsprozesse in den Aggregaten vor und nach der Presse wird die MgO-Menge gleichmäßig verteilt, so dass eine homogene Mischung entsteht.

Das entstehende Granulat wird nunmehr gelagert und die Feuchteaufnahme sowie die Berstfeste im Verlauf der Lagerung gemessen. Es werden folgende Ergebnisse im Vergleich zu einem unter gleichen Bedingungen erzeugten Granulat ohne MgO-Zusatz festgestellt:

| **Betriebsversuch** | | | |
|---|---|---|---|
| Zusatzstoff | | Ohne | MgO |
| Zusatzmenge | | -- | 1,3% |
| | Start | 0,1 | 0,1 |
| Feuchteaufnahme ¹⁾ nach | 1 d | 2,5 | 1,0 |
| " | 2 d | 2,9 | 1,1 |
| " | 4 d | 3,4 | 1,2 |
| " | 8 d | 3,7 | 1,4 |
| Berstfeste ²⁾ | Start | 51 | 55 |
| " | 1 d | 27 | 55 |
| " | 2 d | 25 | 46 |
| " | 4 d | 24 | 47 |
| " | 8 d | 21 | 40 |
| ¹⁾ Gewichtszunahme in % bei Lagerung 20° C, 70 % rel. Luftfeuchte | | | |
| ²⁾ Berstfeste in N/Korn (Fraktion 2,5 - 3 mm) | | | |

Der Vergleich der Messwerte zeigt mit zunehmender Lagerdauer unter den gegebenen Bedingungen die erfindungsgemäßen Wirkungen, nämlich eine nahezu gleichbleibende geringe Feuchteaufnahme beim Granulat mit MgO gegenüber einer stark steigenden Feuchteaufnahme beim Vergleichsgranulat. Die erfindungsgemäße Wirkung hinsichtlich der Entwicklung der Berstfeste wird gleichermaßen reproduziert. Die relativ hohe Anfangs-Berstfeste bleibt auch bei längerer Lagerung beim Granulat mit MgO erhalten, wohingegen beim Vergleichsgranulat eine starke Abnahme der Berstfeste festzustellen ist.

### Beispiel 2:

Die Gegenüberstellung der erfindungsgemäßen Wirkungen eines unter Laborbedingungen verpressten 60er KCl-Feinsalzes mit MgO sowie eines verpressten 60er KCl-Feinsalzes mit CaO jeweils in Anteilen von 1,5 % im Vergleich zu einem Granulat ohne Zusatz zeigt die nachfolgende Tabelle:

| **Laborversuch** | | | | |
|---|---|---|---|---|
| Zusatzstoff | | Ohne | CaO | MgO |
| Zusatzmenge | | -- | 1,5% | 1,5% |
| | Start | -- | -- | -- |
| Feuchteaufnahme ¹⁾ nach | 1 d | 2,3 | 1,0 | 1,4 |
| " | 2 d | 3,1 | 1,2 | 1,4 |
| " | 4 d | 4,1 | 1,3 | 1,5 |
| " | 8 d | 5,2 | 1,3 | 1,5 |
| Berstfeste ²⁾ | Start | 35 | 53 | 45 |
| " | 1 d | 18 | 40 | 43 |
| " | 2 d | 19 | 49 | 31 |
| " | 4 d | 8 | 34 | 41 |
| " | 8 d | 14 | 42 | 37 |
| ¹⁾ Gewichtszunahme in % bei Lagerung 20° C, 70 % rel. Luftfeuchte | | | | |
| ²⁾ Berstfeste in N/Korn (Fraktion 2,5 - 3 mm) | | | | |

Es wird die erfindungsgemäße Wirkung gleichermaßen wie nach Beispiel 1 reproduziert, wobei festzustellen ist, dass sich die positiven Wirkungen CaO vs. MgO nicht signifikant unterscheiden.

## Patentansprüche

1. Verfahren zur Herstellung eines bei hohen relativen Luftfeuchten stabilen Kalidüngemittelgranulates durch Verpressen des entsprechenden Feinsalzes, **dadurch gekennzeichnet, dass** das Kalidüngemittel-Granulat ein Additiv in Form von Magnesiumoxid und / oder Calciumoxid in Pulverform in Anteilen von 1,0 bis 2,0 Prozent bezogen auf die trockene Granulatmenge enthält, wobei das Additiv vor dem Verpressen dem Feinsalz gleichmäßig zudosiert wird und eine homogene Mischung entsteht.

2. Verfahren nach Anspruch 1, **dadurch gekennzeichnet, dass** das Calciumoxid gebrannter Kalk ist.

3. Verfahren nach Anspruch 1, **dadurch gekennzeichnet, dass** Magnesiumoxid und Calciumoxid als Mischung gebrannter Dolomit ist.

## Claims

1. Process for preparing a potash fertilizer stable at high values of relative humidity by compaction of the corresponding fine salt, **characterized in that** the potash fertilizer granulate receives an additive in the shape of powdered magnesium oxide and/or calcium oxide in amounts of 1.0 to 2.0 percent relative to the dry granulate amount, whereby the additive is evenly dosed into the fine salt prior to its compaction and a homogenous mixture is produced.

2. Process according to Claim 1, **characterized in that** the calcium oxide is quicklime.

3. Process according to Claim 1, **characterized in that** the magnesium oxide and the calcium oxide as a mixture are burnt dolomite.

## Revendications

1. Procédé de fabrication d'engrais granulés à base de potasse, stables à des taux relativement élevés d'humidité, par compactage du sel fin correspondant, **caractérisé en ce que** la teneur d'un additif sous forme d'oxyde de magnésium et/ou d'oxyde de calcium en poudre dans des proportions de 1,0 à 2,0 pour cent sur une quantité de granulés secs de l'engrais potassique, cet additif sera dosé uniformément au sel fin afin d'obtenir un mélange homogène avant le compactage.

2. Procédé selon la revendication 1, **caractérisé en ce que** l'oxyde de calcium qui est de la chaux vive.

3. Procédé selon la revendication 1, **caractérisé en ce que** le mélange d'oxyde de magnésium et d'oxyde de calcium issu de la dolomite calcinée.
